# EUROPÄISCHE PATENTSCHRIFT

(11) **EP 0 543 221 B1**
(45) Veröffentlichungstag und Bekanntmachung des Hinweises auf die Patenterteilung: **13.03.1996**
(21) Anmeldenummer: 92118862.9
(22) Anmeldetag: 04.11.1992
(51) Int. Cl.: B42F 13/00, B29C 65/02, B31D 1/00

(54) **Verfahren zur Herstellung von Briefordnern**
Method of making letter filing appliances
Procédé de fabrication de classeurs à lettres

(30) Priorität: 22.11.1991 DE 4138404
(43) Veröffentlichungstag der Anmeldung: 26.05.1993
(73) Patentinhaber: Louis Leitz KG, D-70469 Stuttgart (DE)
(72) Erfinder: Hein, André, W-7000 Stuttgart 30 (DE)
(74) Vertreter: Wolf, Eckhard, Dr.-Ing.

(56) Entgegenhaltungen:
- DE-A- 3 313 879
- DE-A- 3 914 328
- US-A- 4 771 557

## Beschreibung

Die Erfindung betrifft ein Verfahren zur Herstellung von Briefordnern, bei welchem ein aus Pappe bestehender Ordnereinband mit Papier kaschiert und auf dem Papierüberzug vorzugsweise im Bereich eines Ordnerrückens mit einer Tasche aus transparentem Folienmaterial vorzugsweise zur Aufnahme eines Rückenschilds versehen wird, wie es beispielsweise aus der DE-A-3 313 879 bekannt ist.

Es ist bekannt, Briefordner nachträglich mit vorkonfektionierten Rückenschildtaschen zur versehen, die z.B. auf den Ordnerrücken aufgeklebt werden. Es hat sich jedoch gezeigt, daß sich die Verklebung relativ leicht schon bei geringen Abscherkräften lösen läßt.

Ausgehend hiervon liegt der Erfindung die Aufgabe zugrunde, ein Verfahren zu entwickeln, das mit einfachen Mitteln eine zuverlässige Anbringung von Taschen auf papierkaschierten Ordnereinbänden ermöglicht.

Die Erfindung geht von der Erkenntnis aus, daß eine einfache Folie einfacher auf einer Unterlage aufgeklebt werden kann als eine vorkonfektionierte Folientasche und daß beim Anschweißen einer Folie auf eine bereits an einer Unterlage angeklebten Folie es vor allem im Bereich der Schweißnähte zu einer Verbesserung der Klebeverbindung und zu einer erwünschten Reduzierung der Folienwandstärke kommt. Demensprechend wird gemäß der Erfindung vorgeschlagen, daß auf den Papierüberzug des Ordnereinbands ein erster Folienzuschnitt aus thermoplastischen Material flächig aufgeklebt wird und daß unter Bildung der Tasche ein zweiter transparenter Folienzuschnitt aus thermoplastischem Material zumindest im Bereich zweiter einander gegenüberliegender Randbereiche unter der Einwirkung von Druck und Wärme auf den zuvor aufgeklebten ersten Folienzuschnitt aufgeschweißt wird. Vorteilhafterweise wird der zweite Folienzuschnitt zusätzlich im Bereich eines quer zu den beiden ersten Randbereichen verlaufenden Randbereichs unter der Einwirkung von Druck und Wärme auf den zuvor aufgeklebten ersten Folienzuschnitt aufgeschweißt.

Gemäß einer bevorzugten Ausgestaltung der Erfindung wird zum Aufkleben des ersten Folienzuschnitts ein beim Aufschweißen des zweiten Folienzuschnitts in den betreffenden Randbereichen unter der Einwirkung von Druck und Wärme erneut erweichender und anschließend wieder erhärtender Klebstoff verwendet. Der erste Folienzuschnitt wird zweckmäßig als rechteckiger Folienstreifen vorgefertigt, der vorzugsweise in seinen Randabmessungen gegenüber dem zweiten Folienzuschnitt ein geringes Übermaß aufweist. Weiter wird für den ersten Folienzuschnitt zweckmäßig ein vorzugsweise mit der Farbe des Papierüberzugs eingefärbtes opakes Folienmaterial verwendet, das sich optisch vom Papierüberzug wenig abhebt.

Weiter kann der zweite Folienzuschnitt in seinem am ersten Folienzuschnitt nicht anzuschweißenden Randbereich mit einer gegenüber dem Rand des ersten Folienzuschnitts zurückversetzten randoffenen Griffaussparung versehen werden. Eine entsprechende Griffaussparung kann auf der dem nicht angeschweißten Randbereich gegenüberliegenden Randbereich des zweiten Folienzuschnitts vorgesehen werden.

Ein zusätzlicher Schutz der Folientasche gegen ungewolltes Ablösen kann dadurch erzielt werden, daß der Ordnereinband nach dem Anschweißen des zweiten Folienzuschnitts außerhalb des ersten Folienzuschnitts in vorzugsweise gleichen seitlichen Abständen von den beiden einander gegenüberliegenden angeschweißten Randbereichen unter Bildung von Deckelgelenken gestaucht wird.

Im folgenden wird die Erfindung anhand der Zeichnung näher erleutert. Es zeigen
- Fig. 1: eine Draufsicht auf einen Ordnereinband mit Papierkaschierung;
- Fig. 2: eine Draufsicht auf den Ordnereinband nach Fig. 1 mit einem aufgeklebten Folienstreifen;
- Fig. 3: den Ordnereinband nach Fig. 1 und 2 mit auf den Folienstreifen randseitig aufgeschweißter Klarsichtfolie.

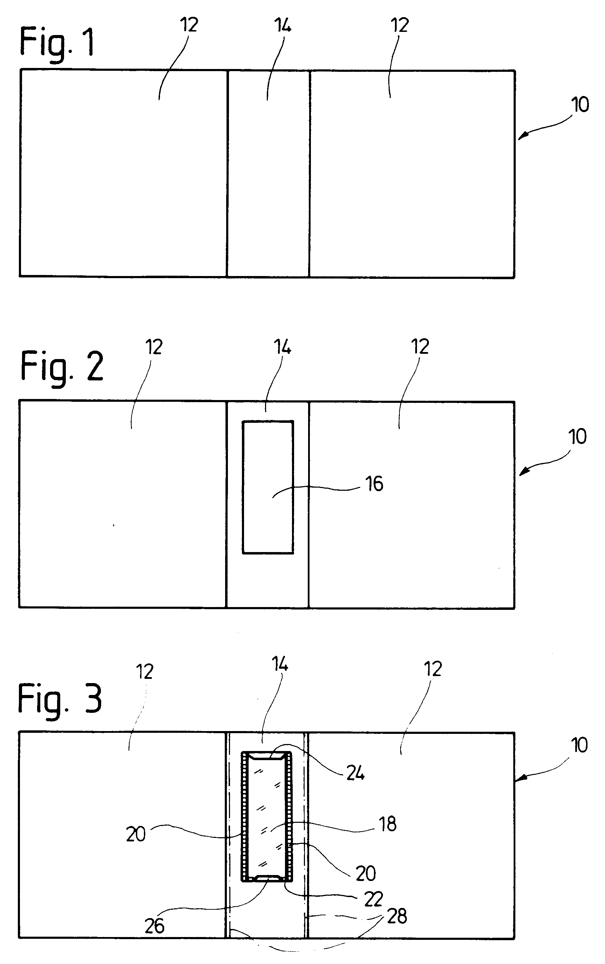

Der aus einem rechteckigen Zuschnitt aus geschichteter Pappe bestehende Ordnereinband 10 wird in seinen Deckelbereichen 12 und seinem Rückenbereich 14 mit gegebenenfalls unterschiedlich farbigem Papier kaschiert. Sodann wird im Bereich des Rückenbereichs 14 ein rechteckiger Streifen 16 aus opakem thermoplastischem Folienmaterial, beispielsweise aus Polypropylen oder Celluloseacetat, mit Hilfe eines vorzugsweise ebenfalls thermoplastischen Klebstoffs flächig aufgeklebt (Fig. 2). Der Folienstreifen 16 ist aus optischen Gründen zweckmäßig mit einer der Papierfarbe des Ordnerrückens 14 entsprechenden Farbe eingefärbt.

In einer weiteren Bearbeitungsstation wird sodann ein Zuschnitt 18 aus transparentem thermoplastischem Folienmaterial, beispielsweise aus Polypropylen oder Celluloseacetat, im Bereich der einander gegenüberliegenden Seitenränder 20 und des unteren Randes 24 auf den Folienstreifen 16 aufgeschweißt. Im Zuges des Schweißvorgangs entsteht eine innige Schweiß- und Klebeverbindung zwischen den Folien 16 und 18 untereinander und dem Rückenbereich 14 des Ordnereinbands 10. Die randoffenen Aussparungen 24, 26 im Folienzuschnitt 18 dienen als Grifflöcher und erleichtern das Einführen, Justieren und Herausziehen eines Rückenschilds.

Im Anschluß an das Aufschweißen des Folienzuschnitts 18 wird in einer weiteren Bearbeitungsstation der Ordnereinband im Bereich der strichpunktierten Linien unter Bildung von Gelenken für die Ordnerdeckel 12 gestaucht. Die Stauchung kann zu einer Auswölbung des Ordnerrückens in der Nähe der Seitenränder 20 führen, die einen zusätzlichen, einem Abscheren entgegenwirkenden Kantenschutz für die Folientasche 16,18 bildet.

Zusammenfassend ist folgendes festzustellen:
Die Erfindung bezieht sich auf ein Verfahren zur Herstellung von Briefordnern, bei welchem ein aus Pappe bestehender Ordnereinband mit Papier kaschiert und auf dem Papierüberzug im Bereich eines Ordnerrückens mit einer Tasche aus transparentem Folienmaterial zur Aufnahme eines Rückenschilds versehen wird. Um mit einfachen Mitteln eine zuverlässige Befestigung der Folientasche zu gewährleisten, wird auf dem Papierüberzug des Ordnereinbands zunächst ein erster Folienzuschnitt aus thermoplastischem Material flächig aufgeklebt. Anschließend wird unter Bildung der Tasche ein zweiter transparenter Folienzuschnitt aus thermoplastischem Material im Bereich zweier einander gegenüberliegender Randbereiche und eines quer zu diesen verlaufenden Randbereichs unter Einwirkung von Druck und Wärme auf den zuvor aufgeklebten Folienzuschnitt aufgeklebt. Vorteilhafterweise wird zum Ankleben des ersten Folienzuschnitts ein beim Anschweißen des zweiten Folienzuschnitts unter der Einwirkung von Druck und Wärme erneut erweichender und anschließend wieder aushärtender Klebstoff verwendet.

## Patentansprüche

1. Verfahren zur Herstellung von Briefordnern, bei welchem ein aus Pappe bestehender Ordnereinband mit Papier kaschiert und auf dem Papierüberzug vorzugsweise im Bereich eines Ordnerrückens mit einer Tasche aus transparentem Folienmaterial vorzugsweise zur Aufnahme eines Rückenschilds versehen wird, **dadurch gekennzeichnet,** daß auf den Papierüberzug des Ordnereinbands ein erster Folienzuschnitt aus thermoplastischem Material flächig aufgeklebt wird, und daß unter Bildung der Tasche ein zweiter transparenter Folienzuschnitt aus thermoplastischem Material im Bereich zweier einander gegenüberliegender Randbereiche unter Einwirkung von Druck und Wärme auf dem zuvor aufgeklebten ersten Folienzuschnitt aufgeschweißt wird.

2. Verfahren nach Anspruch 1, **dadurch gekennzeichnet,** daß der zweite Folienzuschnitt zusätzlich im Bereich eines quer zu den einander gegenüberliegenden Randbereichen verlaufenden Randbereichs unter Einwirkung von Druck und Wärme auf dem zuvor aufgeklebten ersten Folienzuschnitt aufgeschweißt wird.

3. Verfahren nach einem der Ansprüche 1 bis 2, **dadurch gekennzeichnet,** daß zum Aufkleben des ersten Folienzuschnitts ein beim Aufschweißen des zweiten Folienzuschnitts in den betreffenden Randbereichen unter der Einwirkung von Druck und Wärme erneut erweichender und anschließend wieder aushärtender Klebstoff verwendet wird.

4. Verfahren nach eine der Ansprüche 1 bis 3, **dadurch gekennzeichnet,** daß der erste Folienzuschnitt in seinen Randabmessungen gegenüber dem zweiten Folienzuschnitt mit geringem Übermaß vorgefertigt wird.

5. Verfahren nach einem der Ansprüche 1 bis 4, **dadurch gekennzeichnet,** daß der erste Zuschnitt als rechteckiger Folienstreifen vorgefertigt wird.

6. Verfahren nach einem der Ansprüche 1 bis 5, **dadurch gekennzeichnet,** daß für den ersten Folienzuschnitt ein vorzugsweise mit der Farbe des Papierüberzugs eingefärbtes opakes Folienmaterial verwendet wird.

7. Verfahren nach einem der Ansprüche 1 bis 6, **dadurch gekennzeichnet,** daß der zweite Folienzuschnitt in seinem am ersten Folienzuschnitt nicht anzuschweißenden Randbereich mit einer gegenüber dem Rand des ersten Folienzuschnitts zurückversetzten randoffenen Aussparung vorgefertigt wird.

8. Verfahren nach einem der Ansprüche 1 bis 7, **dadurch gekennzeichnet,** daß der zweite Folienzuschnitt in seinem dem nicht angeschweißten Randbereich gegenüberliegenden Randbereich mit einer gegenüber dem Rand des ersten Folienzuschnitts zurückversetzten randoffenen Aussparung vorgefertigt wird.

9. Verfahren nach einem der Ansprüche 1 bis 8, **dadurch gekennzeichnet,** daß der Ordnereinband nach dem Anschweißen des zweiten Folienzuschnitts außerhalb des ersten Folienzuschnitts in vorzugsweise gleichem seitlichen Abstand von den beiden einander gegenüberliegenden angeschweißten Randbereichen unter Bildung von Deckelgelenken gestaucht wird.

## Claims

1. Method of manufacturing letter files, whereby a file binding made of board is sheet-lined and provided on the paper cover, preferably in the region of a file spine, with a pocket made of transparent foil material preferably for receiving a title panel, **characterized in** that a first foil blank of thermoplastic material is glued flat onto the paper cover of the file binding and that, to form the pocket, a second transparent foil blank of thermoplastic material is welded in the region of two opposing edge regions under the action of pressure and heat onto the previously affixed, first foil blank.

2. Method according to claim 1**, characterized in that** the second foil blank is additionally welded in the region of an edge region, which extends at right angles to the opposing edge regions, under the action of pressure and heat onto the previously affixed, first foil blank.

3. Method according to one of claims 1 to 2, **characterized in that** the adhesive used to affix the first foil blank is one which, when the second foil blank is welded on, in the relevant edge regions softens once more under the action of pressure and heat and then sets again.

4. Method according to one of claims 1 to 3, **characterized in that** the first foil blank is prefabricated with a slight oversize in its edge dimensions compared to the second foil blank.

5. Method according to one of claims 1 to 4, **characterized in that** the first blank is prefabricated in the form of a rectangular foil strip.

6. Method according to one of claims 1 to 5, **characterized in that** an opaque foil material, which is preferably dyed the same colour as the paper cover, is used for the first foil blank.

7. Method according to one of claims 1 to 6, **characterized in that** the second foil blank, in its edge region which is not to be welded to the first foil blank, is prefabricated with an open-edged recess which is set back relative to the edge of the first foil blank.

8. Method according to one of claims 1 to 7, **characterized in that** the second foil blank, in its edge region lying opposite the non-welded edge region, is prefabricated with an open-edged recess which is set back relative to the edge of the first foil blank.

9. Method according to one of claims 1 to 8, **characterized in that** the file binding, after the second foil blank has been welded thereon, is compressed outside of the first foil blank at a preferably identical lateral distance from the two opposing, welded edge regions so as to form cover joints.

## Revendications

1. Procédé de fabrication de classeurs à lettres, selon lequel une reliure de classeur en carton est contre-collée de papier, et est munie sur la doublure de papier, dans la zone d'un dos de classeur de préférence, d'une pochette composée d'un film transparent pour recevoir une étiquette, caractérisé en ce qu'une première découpe de film en matière thermoplastique est collée à plat sur la doublure de papier de la reliure du classeur, et en ce qu'une seconde découpe de film transparent en matière thermoplastique est soudée sur la première découpe de film préalablement collée, dans la zone de deux zones de bordure en vis-à-vis, sous l'effet de la pression et de la chaleur, en formant la pochette.

2. Procédé suivant la revendication 1, caractérisé en ce que la seconde découpe de film est soudée en supplément sur la première découpe de film préalablement collée, dans la zone d'une zone de bordure située à la transversale des zones de bordure en vis-à-vis, sous l'effet de la pression et de la chaleur.

3. Procédé suivant l'une quelconque des revendications 1 à 2, caractérisé en ce qu'une colle, ramollie sous l'effet de la pression et de la chaleur lors du soudage de la seconde découpe de film dans les zones de bordure concernées, puis redurcie, est utilisée pour le collage de la première découpe de film.

4. Procédé suivant l'une des revendications 1 à 3, caractérisé en ce que la première découpe de film est préfabriquée, dans ses dimensions extrêmes, avec une légère surmesure par rapport à la seconde découpe de film.

5. Procédé suivant l'une quelconque des revendications 1 à 4, caractérisé en ce que la première découpe est préfabriquée sous forme de ruban pelliculaire rectangulaire.

6. Procédé suivant l'une quelconque des revendications 1 à 5, caractérisé en ce qu'un film opaque, teinté de préférence dans la couleur de la doublure de papier, est utilisé pour la première découpe de film.

7. Procédé suivant l'une quelconque des revendications 1 à 6, caractérisé en ce que la seconde découpe de film est préfabriquée, dans sa zone de bordure non soudée sur la première découpe de film, avec un évidement ouvert en bordure, en déport par rapport au bord de la première découpe de film.

8. Procédé suivant l'une quelconque des revendications 1 à 7, caractérisé en ce que la seconde découpe de film est préfabriquée, dans sa zone de de bordure en vis-à-vis de la zone de bordure non soudée, avec un évidement ouvert en bordure, en déport par rapport au bord de la première découpe de film.

9. Procédé suivant l'une quelconque des revendications 1 à 8, caractérisé en ce que la reliure de classeur est écrasée, après le soudage de la seconde découpe de film, à l'extérieur de la première découpe de film, à une distance latérale, égale de préférence, des deux zones de bordure soudées en vis-à-vis, en formant des jointures de couverture.
